# EUROPEAN PATENT APPLICATION

(11) **EP 4 822 829 A1**
(43) Date of publication of application: **14.10.2026**
(21) Application number: 25889720.6
(22) Date of filing: 17.09.2025
(51) Int. Cl.: H01M 10/6554, H01M 10/6556, H01M 10/625, H01M 10/48, H01M 50/242

(54) **BATTERY ASSEMBLY**

(30) Priority: 06.11.2024 KR 20240156338
(71) Applicant: LG Energy Solution, Ltd., Seoul 07335 (KR)
(72) Inventor: LEE, Sang-Joon, Daejeon 34122 (KR); KANG, Jong-Mo, Daejeon 34122 (KR); KWON, Hyun-Soo, Daejeon 34122 (KR); RO, Yong-Hwan, Daejeon 34122 (KR); PARK, Shin-Young, Daejeon 34122 (KR); SEO, Sung-Won, Daejeon 34122 (KR); AHN, Moon-Youl, Daejeon 34122 (KR); HWANG, Tae-Won, Daejeon 34122 (KR)
(74) Representative: BCKIP Part mbB
(86) International application number: PCT/KR2025/014462
(87) International publication number: WO 2026/100971

(57) **Abstract**

Disclosed is a battery assembly. The battery assembly includes a case providing a space therein and including a top cover; a plurality of battery cells located within the case; a perimeter wall located between the plurality of battery cells and the top cover and providing a space therein; a temperature sensor located within the perimeter wall; and a heat transfer member located between the plurality of battery cells and the top cover.

## Description

### TECHNICAL FIELD

The present disclosure relates to a battery assembly.

This application is based on and claims priority from Korean Patent Application No. 10-2024-0156338, filed on November 6, 2024, with the Korean Intellectual Property Office, the disclosure of which is incorporated herein in its entirety by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery unit. At this time, each secondary battery included in one battery unit may be referred to as a battery cell. In addition, multiple battery units may be connected to each other to form a battery assembly.

However, when a battery assembly includes a plurality of battery units and each battery unit includes a plurality of battery cells, it may be vulnerable to a thermal chain reaction between battery units or between battery cells. For example, when an event such as thermal runaway occurs within a single battery unit, the thermal runaway must be suppressed from propagating to other battery units or other battery cells. If the propagation of thermal runaway between battery units or battery cells is not properly suppressed, an event occurring in a specific battery unit or battery cell may cause a chain thermal reaction in other battery units or other battery cells, potentially causing an explosion or fire or increasing its scale.

In particular, when an event such as thermal runaway occurs in a single battery unit, gas or flame may be randomly discharged to the outside. If the discharge of gas or flame is not properly controlled, the gas or flame may be discharged toward other battery units, potentially causing a thermal chain reaction in the other battery units. In particular, a module terminal may be present at the front side of the battery unit, and a component such as a module bus bar for electrical connection with other battery units or battery assemblies may be present. Therefore, if flame is discharged to the front side of the battery unit, the module terminals may be damaged and an electrical short may occur within the battery assembly. In addition, since other battery units may be present at the front side of the battery unit, if flame is discharged to the front side of a specific battery unit, the discharged flame may be directed to other battery units, easily causing a fire to spread between battery units.

If thermal transfer between battery unit s or battery cells is not properly controlled, a sudden voltage drop may occur in the battery unit or battery assembly. This may lead to a sudden shutdown of the device in which the battery unit or battery assembly is mounted, resulting in unexpected damage. For example, if a voltage drop occurs suddenly in a battery assembly while an electric vehicle is in operation, there is no time to move the vehicle to a safe location.

Furthermore, if thermal propagation between battery units or battery cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

To ensure thermal safety, it is important to precisely monitor the temperature of the battery unit or the battery assembly. By accurately measuring the temperature of the battery unit or the battery assembly, the battery assembly may be stably controlled. Therefore, a structure that protects the temperature sensor from damage is necessary.

### DISCLOSURE

### Technical Problem

The present disclosure is designed to solve the problems of the related art, and therefore the present disclosure is directed to providing a battery assembly with an improved structure that may prevent damage to a temperature sensor during the process of producing a battery unit or a battery assembly, and a vehicle including the same.

In addition, the present disclosure is directed to providing a structure that may prevent damage to a temperature sensor while increasing the cooling efficiency of the battery assembly.

In addition, the present disclosure is directed to providing a structure that may prevent damage to the temperature sensor when a thermal event occurs.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery assembly comprising: a case providing a space therein and including a top cover; a plurality of battery cells located within the case; a perimeter wall located between the plurality of battery cells and the top cover and providing a space therein; a temperature sensor located within the perimeter wall; and a heat transfer member located between the plurality of battery cells and the top cover.

In addition, the heat transfer member may be located at an outer side of the perimeter wall.

In addition, the heat transfer member may be configured to surround the perimeter wall.

In addition, the temperature sensor may be in contact with at least some battery cells among the plurality of battery cells.

In addition, the top cover may have a flow path therein.

In addition, the perimeter wall may be in contact with a lower surface of the top cover.

In addition, the perimeter wall may be formed integrally with the top cover.

In addition, the perimeter wall may be in contact with at least some battery cells among the battery cells.

In addition, the perimeter wall may be provided in plurality, and the temperature sensor may be provided in plurality to correspond to the plurality of perimeter walls in one-to-one relationship.

A vehicle according to one aspect of the present disclosure may include the battery assembly of the present disclosure.

### Advantageous Effects

According to at least one of the embodiments of the present disclosure, damage to the temperature sensor may be prevented during the process of producing a battery unit or a battery assembly.

According to at least one of the embodiments of the present disclosure, damage to the temperature sensor may be prevented while increasing the cooling efficiency of a battery assembly.

According to at least one of the embodiments of the present disclosure, damage to the temperature sensor may be prevented when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery assembly according to an embodiment of the present disclosure.
FIG. 2 is a drawing showing the battery assembly of FIG. 1, in which some components are exploded.
FIG. 3 is a drawing showing the battery unit of FIG. 2.
FIG. 4 is a drawing showing some components of the battery unit of FIG. 3.
FIG. 5 is a drawing showing some components of the top cover of FIG. 2.
FIG. 6 is a drawing showing the top cover of FIG. 2.
FIG. 7 is a drawing showing some components of the battery assembly of FIG. 1.
FIG. 8 is a drawing showing some components of the battery assembly of FIG. 1.
FIG. 9 is a cross-sectional view taken along the cutting line A-A' of FIG. 1.
FIG. 10 is a view showing a modified embodiment of FIG. 6.
FIG. 11 is a view showing a modified embodiment of FIG. 9.
FIG. 12 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

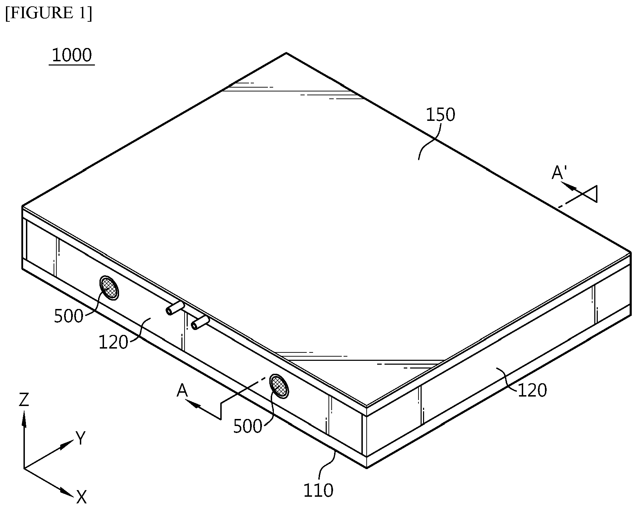

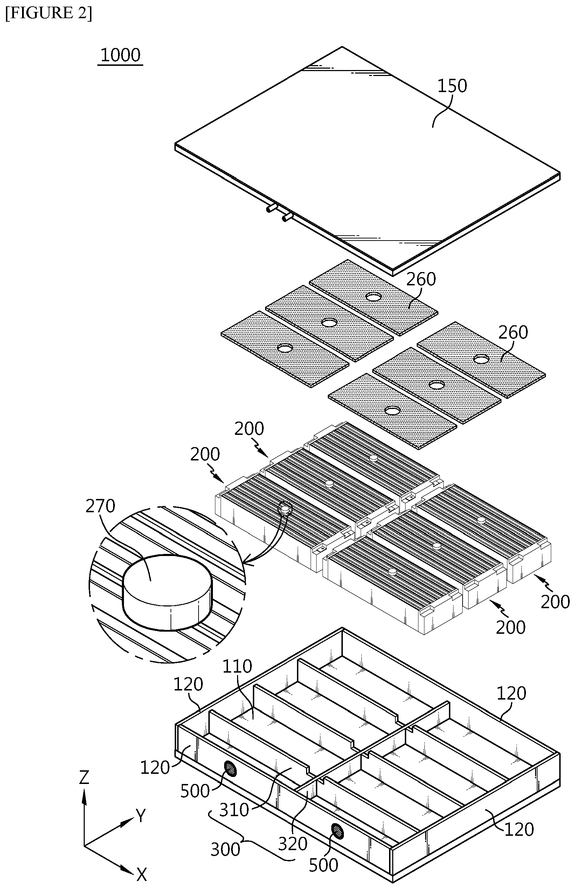

FIG. 1 is a drawing showing a battery assembly 1000 according to an embodiment of the present disclosure. FIG. 2 is an exploded view showing some components of the battery assembly 1000 of FIG. 1.

Referring to FIGS. 1 and 2, the battery assembly 1000 may include a case 100. The case 100 may include a base plate assembly 110. The base plate assembly 110 may have a rectangular shape. The base plate assembly 110 may have a flat plate shape. The base plate assembly 110 may form the outer appearance of the battery assembly 1000. The base plate assembly 110 may provide an inner space of the battery assembly 1000.

The case 100 may include a side wall 120. The side wall 120 may be installed, fastened, coupled, fixed, or attached to the upper surface of the base plate assembly 110. Four side walls 120 may be provided. The side wall 120 may be arranged along the perimeter of the base plate assembly 110. The side wall 120 may form the outer appearance of the battery assembly 1000. The side wall 120 may provide an inner space.

The battery assembly 1000 may include a battery unit 200. The battery unit 200 may have a rectangular parallelepiped shape. The battery unit 200 may be provided in plurality. The plurality of battery units 200 may be located inside the case 100. The plurality of battery units 200 may be installed, coupled, fastened, fixed, or attached to the base plate assembly 110.

The case 100 may include a top cover 150. The top cover 150 may have a square plate shape. The top cover 150 may have a flat plate shape. The top cover 150 may form the outer appearance of the battery assembly 1000. The top cover 150 may cover the inner space of the battery assembly 1000. The top cover 150 may be located above the battery unit 200.

The heat transfer member 260 may be disposed between the battery unit 200 and the top cover 150. The heat transfer member 260 may be disposed between the plurality of battery cells 220 and the top cover 150. The heat transfer member 260 may contain a material having high thermal conductivity. For example, the heat transfer member 260 may be a resin. The heat transfer member 260 may couple, fix, or attach the battery unit 200 and the top cover 150. The heat transfer member 260 may couple, fix, or attach the plurality of battery cells 220 and the top cover 150. The heat transfer member 260 may transfer heat of the battery unit 200 to the top cover 150. The heat transfer member 260 may transfer heat of the plurality of battery cells 220 to the top cover 150.

The battery assembly 1000 may include a venting device 500. The venting device 500 may be installed on the side wall 120. For example, the venting device 500 may be a gas valve. The venting device 500 may open to discharge gas when the pressure inside the case 100 increases. In addition, the venting device 500 may block external air from flowing into the case 100. The venting device 500 may be provided in plurality.

The battery assembly 1000 may include a partition wall 300. The partition wall 300 may include a first partition wall 310. The first partition wall 310 may be provided in plurality. The first partition wall 310 may be installed, fastened, fixed, coupled, or attached to the upper surface of the base plate assembly 110. The first partition wall 310 may partition the inner space of the battery assembly 1000. The first partition wall 310 may be provided at both sides of the battery unit 200, respectively.

The partition wall 300 may include a second partition wall 320. The second partition wall 320 may be installed, fastened, fixed, coupled, or attached to the upper surface of the base plate assembly 110. The second partition wall 320 may partition the inner space of the battery assembly 1000. The second partition wall 320 may extend along the right and left direction or the Y-axis direction. The first partition wall 310 may be arranged at both sides centered on the second partition wall 320.

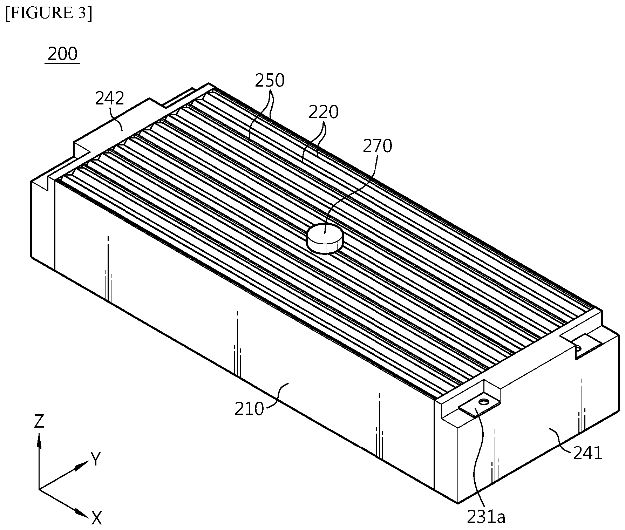

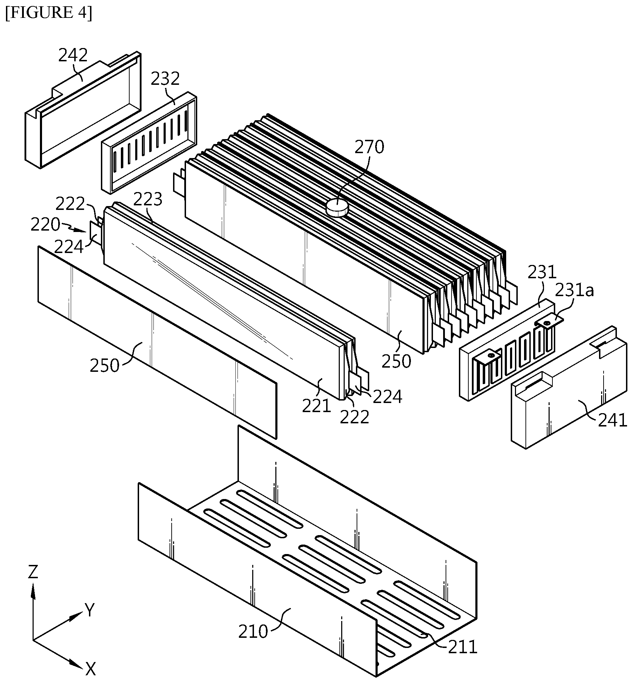

FIG. 3 is a drawing showing the battery unit 200 of FIG. 2. FIG. 4 is a drawing showing some components of the battery unit 200 of FIG. 3.

Referring to FIGS. 3 and 4, the battery unit 200 may include a frame 210. The frame 210 may provide a space therein. The frame 210 may include a bottom plate and a pair of side plates. The frame 210 may be formed integrally. The frame 210 may have open front and rear surfaces. The frame 210 may have an open upper surface. The frame 210 may have a first venting hole 211. The first venting hole 211 may be formed in the bottom plate. The first venting hole 211 may be provided in plurality.

The battery unit 200 may include a battery cell 220. The battery cell 220 may be provided in plurality. In this case, the battery cells 220 may refer to secondary batteries. In particular, the battery cells 220 may be secondary batteries having a pouch shape. However, the shape of the battery cells 220 is not limited to the pouch shape, and the battery cells 220 may have various shapes such as a cylindrical shape or a rectangular parallelepiped shape. The plurality of battery cells 220 may be located, installed, coupled, fastened, fixed, or attached to the upper surface of the bottom plate.

Each battery cell 220 may extend along the front and rear direction or the X-axis direction. The plurality of battery cells 220 may be stacked along the right and left direction or the Y-axis direction. The plurality of battery cells 220 may be stacked to form a battery stack. The plurality of battery cells 220 may be accommodated inside the frame 210. The plurality of battery cells 220 may be arranged between the pair of side plates of the frame 210.

The battery cell 220 may include an accommodation portion 221 containing an electrode assembly, a first sealing portion 222 protruding forward and backward from the accommodation portion 221, and a second sealing portion 223 protruding upward from the accommodation portion 221. In addition, the battery cell 220 may include electrode leads 224 protruding forward and backward from the first sealing portion 222, respectively. Each battery cell 220 may extend along the front and rear direction or the X-axis direction. The electrode leads 224 may protrude forward and backward from each battery cell 220.

The battery unit 200 may include a pad 250. The pad 250 may be disposed between the plurality of battery cells 220. The pad 250 may be arranged between at least some of the battery cells 220 and/or at the periphery of the stack 201. For example, the pad 250 may be configured to be arranged between every two battery cells 220 stacked in the right and left direction.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The battery unit 200 may include a front bus bar frame assembly 231. The front bus bar frame assembly 231 may be electrically connected to front the electrode leads 224 of the plurality of battery cells 220. The front bus bar frame assembly 231 may cover the front side of the accommodation portion 221. The front bus bar frame assembly 231 may include a power terminal 231a. The power terminal 231a may be electrically connected to the plurality of battery cells 220. The power terminal 231a may be provided as a pair. The power terminals 231a may be exposed to the outside of the battery unit 200. The power terminal 231a may be electrically connected to another battery unit 200 or a BMS (Battery Management System).

The battery unit 200 may include a rear bus bar frame assembly 232. The rear bus bar frame assembly 232 may be electrically connected to the rear side electrode leads 224 of the plurality of battery cells 220. The rear bus bar frame assembly 232 may cover the rear side of the accommodation portion 221.

The front insulation cover 241 may cover the front bus bar frame assembly 231. The front insulation cover 241 may be coupled, fastened, fixed, installed or attached to the front bus bar frame assembly 231. The front insulation cover 241 may contain a material having electrical insulation properties. The front insulation cover 241 may expose the power terminal 231a. The front insulation cover 241 may be coupled, fastened, fixed, installed or attached to the side plate of the frame 210.

The rear insulation cover 242 may cover the rear bus bar frame assembly 232. The rear insulation cover 242 may be coupled, fastened, fixed, installed or attached to the rear bus bar frame assembly 232. The rear insulation cover 242 may contain a material having electrical insulation properties. The rear insulation cover 242 may be coupled, fastened, fixed, installed or attached to the side plate of the frame 210.

The battery unit 200 may include a temperature sensor 270. The temperature sensor 270 may be located above the plurality of battery cells 220. The temperature sensor 270 may be in contact with some battery cells 220 among the plurality of battery cells 220. The temperature sensor 270 may be installed, contacted, arranged, coupled to, or attached to the upper surface of some battery cells 220 among the plurality of battery cells 220. The temperature sensor 270 may be electrically connected to the control unit of the battery unit 200. The temperature sensor 270 may detect the temperature of the battery cell 220. The battery unit 200 may include a plurality of temperature sensors 270.

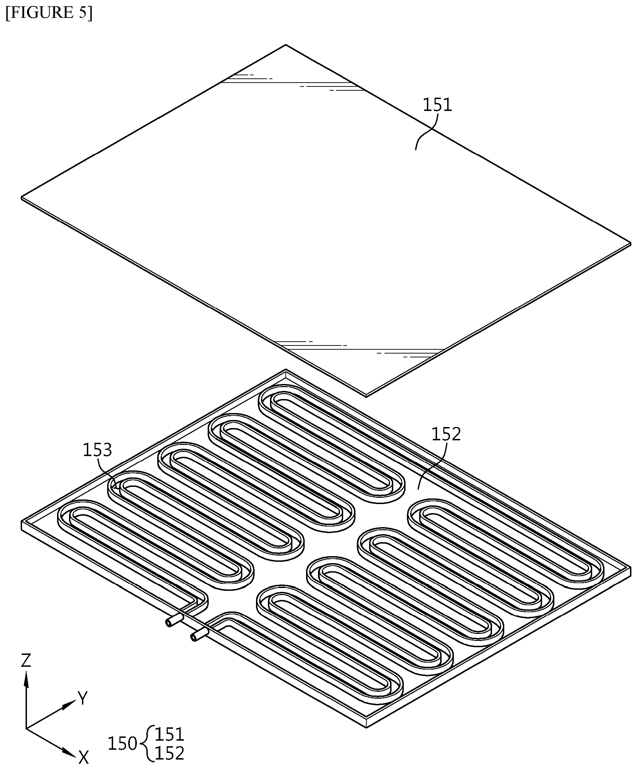

FIG. 5 is a drawing showing some components of the top cover 150 of FIG. 2. Referring to FIG. 5, the top cover 150 may have a flow path 153 therein. The top cover 150 may function as a heatsink. A cooling fluid may be received in the flow path 153 of the top cover 150.

The top cover 150 may include an upper plate 151 and a lower plate 152. The lower plate 152 may be fastened, coupled, installed, fixed, or attached to the lower surface of the upper plate 151. The flow path 153 may be formed between the upper plate 151 and the lower plate 152.

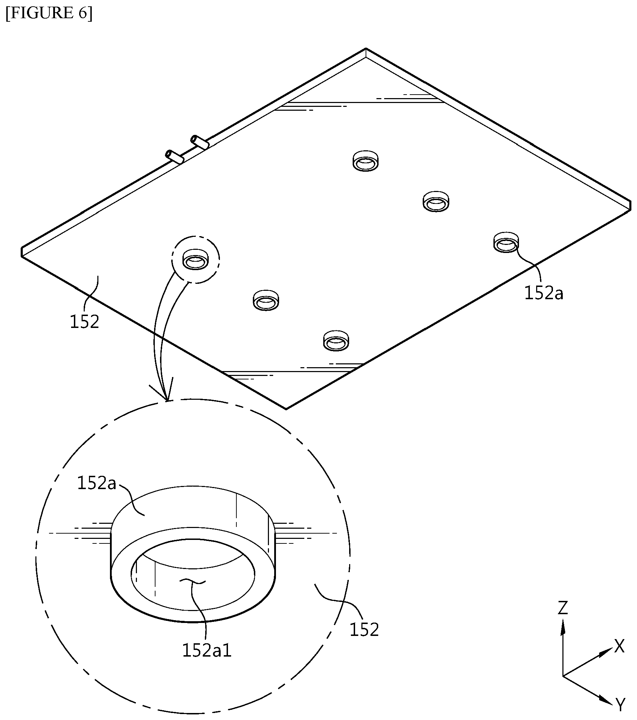

FIG. 6 is a drawing showing the top cover 150 of FIG. 2. Referring to FIG. 6, the top cover 150 may include a perimeter wall 152a. The perimeter wall 152a may protrude downward from the lower plate 152. The perimeter wall 152a may be formed on the lower surface of the lower plate 152. The perimeter wall 152a may be formed integrally with the lower plate 152. The perimeter wall 152a may provide an accommodation space 152a1 therein.

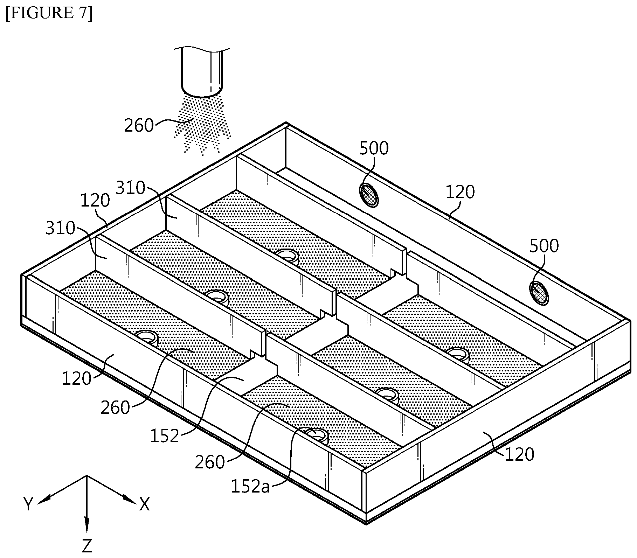

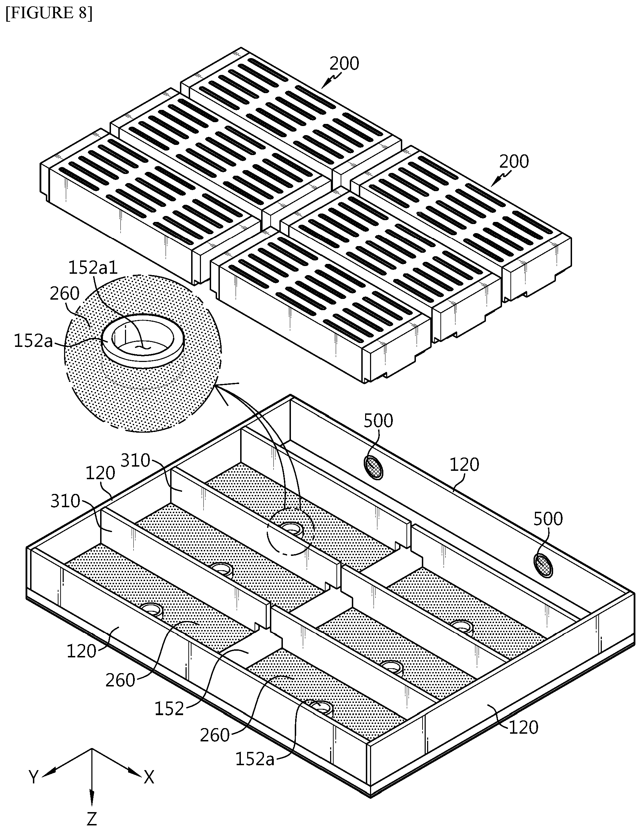

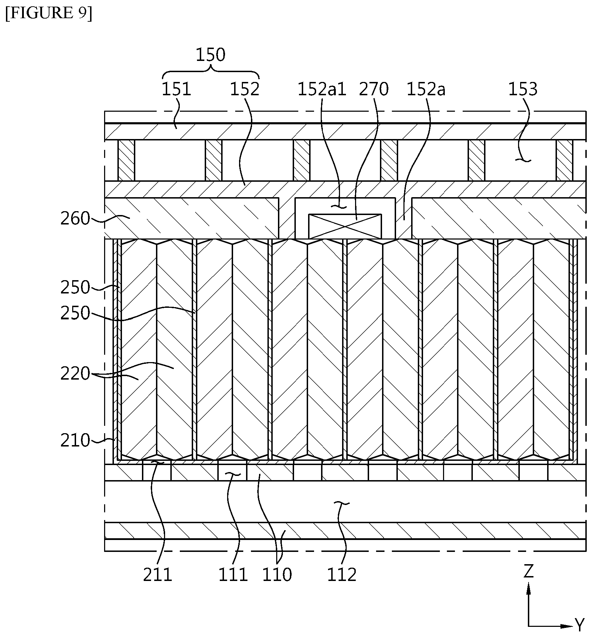

FIG. 7 is a drawing showing some components of the battery assembly 1000 of FIG. 1. FIG. 8 is a drawing showing some components of the battery assembly 1000 of FIG. 1. FIG. 9 is a cross-sectional view taken along the cutting line A-A' of FIG. 1.

Referring to FIGS. 6 to 9, the side wall 120 and the partition wall 300 may be installed, fastened, coupled, or fixed to the top cover 150. The heat transfer member 260 may be provided on the lower surface of the lower plate 152. The heat transfer member 260 may be applied to the lower surface of the lower plate 152. The heat transfer member 260 may be formed to correspond to the battery unit 200.

The heat transfer member 260 may not be formed in the accommodation space 152a1 of the perimeter wall 152a. The heat transfer member 260 may be arranged at the outer side of the perimeter wall 152a. The heat transfer member 260 may be arranged to surround the perimeter wall 152a. The heat transfer member 260 may not be arranged in the accommodation space 152a1 of the perimeter wall 152a.

The battery unit 200 may be installed, fastened, coupled, or attached to the lower plate 152. The upper surface of the battery unit 200 may be installed, fastened, coupled, or attached to the lower surface of the lower plate 152. At this time, the temperature sensor 270 may be located in the accommodation space 152a1 of the perimeter wall 152a. The temperature sensor 270 may be accommodated in the accommodation space 152a1 of the perimeter wall 152a.

The perimeter wall 152a may be provided in plurality. The temperature sensor 270 may be provided in plurality to correspond to the perimeter wall 152a in one-to-one relationship. Each temperature sensor 270 may be accommodated in the accommodation space 152a1 of each perimeter wall 152a.

The temperature sensor 270 may not be in contact with the heat transfer member 260. The temperature sensor 270 may be arranged to be separated from the heat transfer member 260. The temperature sensor 270 may be prevented from being pressed by weight or pressure during the process of assembling the battery assembly 1000. The perimeter wall 152a may prevent the temperature sensor 270 from being pressed. By preventing the temperature sensor 270 from being pressed, failure or damage to the temperature sensor 270 may be prevented. As a result, the productivity of the battery assembly 1000 may be improved.

The perimeter wall 152a may be in contact with, coupled to, or fixed to some battery cells 220 among the plurality of battery cells 220. The perimeter wall 152a may be in contact with, coupled to, or fixed to the upper surface of some battery cells 220 among the plurality of battery cells 220.

The base plate assembly 110 may have a venting space 112 therein. The base plate assembly 110 may have a second venting hole 111. The second venting hole 111 may be formed in the upper surface of the base plate assembly 110. The second venting hole 111 may communicate with the first venting hole 211. The second venting hole 111 may be provided in plurality. The second venting hole 111 may be provided to correspond to the first venting hole 211 in one-to-one relationship. The second venting hole 111 may communicate the first venting hole 211 and the venting space 112 with each other. The venting space 112 may communicate with the venting device 500. When the venting gas is discharged from the battery unit 200, the venting gas may be discharged to the venting device 500 through the venting space 112.

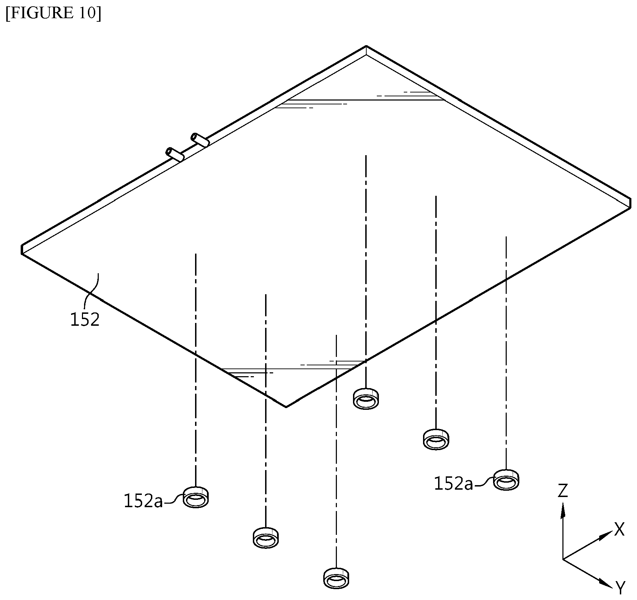

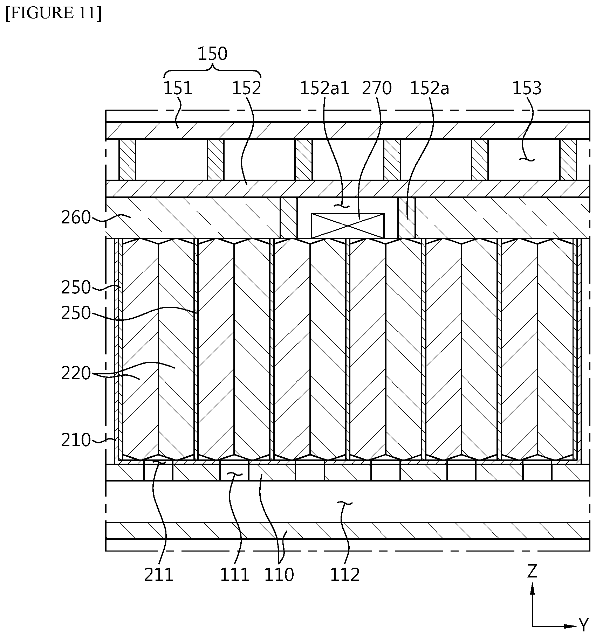

FIG. 10 is a view showing a modified embodiment of FIG. 6. FIG. 11 is a view showing a modified embodiment of FIG. 9.

Referring to FIGS. 10 and 11, the battery assembly 1000 may include a perimeter wall 152a. The perimeter wall 152a may be provided as a separate component from the top cover 150. The perimeter wall 152a may be installed, coupled, contacted, or attached to the lower surface of the top cover 150. The perimeter wall 152a may be installed, coupled, contacted, or attached to the lower surface of the lower plate 152.

The perimeter wall 152a may be installed, coupled, contacted, or attached between the lower plate 152 and the battery cell 220. The perimeter wall 152a may be installed, coupled, contacted, or attached between the lower surface of the lower plate 152 and the upper surface of the battery cell 220.

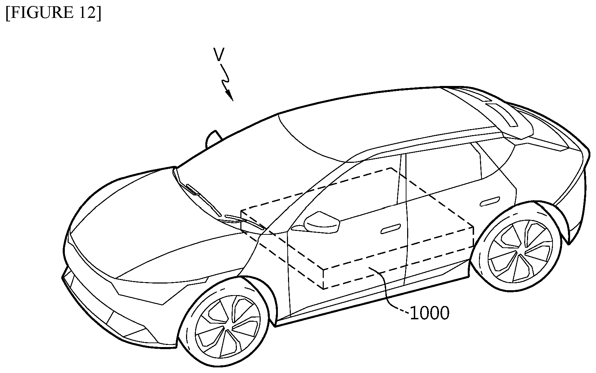

FIG. 12 is a drawing showing a vehicle V according to an embodiment of the present disclosure. Referring to FIG. 12, the vehicle V according to an embodiment of the present disclosure may include the battery assembly 1000 of the present disclosure. The battery assembly 1000 according to the present disclosure may be applied to the vehicle V such as an electric vehicle or a hybrid electric vehicle. That is, the vehicle V according to the present disclosure may include the battery assembly 1000 according to the present disclosure. In addition, the vehicle V according to the present disclosure may further include various other components included in a vehicle, in addition to the battery assembly 1000. For example, the vehicle V according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery assembly comprising:
a case providing a space therein and including a top cover;
a plurality of battery cells located within the case;
a perimeter wall located between the plurality of battery cells and the top cover and providing a space therein;
a temperature sensor located within the perimeter wall; and
a heat transfer member located between the plurality of battery cells and the top cover.

2. The battery assembly according to claim 1,
wherein the heat transfer member is located at an outer side of the perimeter wall.

3. The battery assembly according to claim 1,
wherein the heat transfer member is configured to surround the perimeter wall.

4. The battery assembly according to claim 1,
wherein the temperature sensor is in contact with at least some battery cells among the plurality of battery cells.

5. The battery assembly according to claim 1,
wherein the top cover has a flow path therein.

6. The battery assembly according to claim 1,
wherein the perimeter wall is in contact with a lower surface of the top cover.

7. The battery assembly according to claim 1,
wherein the perimeter wall is formed integrally with the top cover.

8. The battery assembly according to claim 1,
wherein the perimeter wall is in contact with at least some battery cells among the battery cells.

9. The battery assembly according to claim 1,
wherein the perimeter wall is provided in plurality, and
wherein the temperature sensor is provided in plurality to correspond to the plurality of perimeter walls in one-to-one relationship.

10. A vehicle comprising the battery assembly according to any one of claims 1 to 9.
